# FASCICULE DE BREVET EUROPEEN

(11) **EP 1 500 419 B1**
(45) Date de publication et mention de la délivrance du brevet: **09.02.2011**
(21) Numéro de dépôt: 04016374.3
(22) Date de dépôt: 13.07.2004
(51) Int. Cl.: B01D 17/12, F16K 31/22, C02F 1/40

(54) **Obturateur automatique pour cuve séparatrice de liquides légers tels qu'hydrocarbures**
Automatische Verschlussanordnung für Abscheider für leichte Flüssigkeiten wie Kohlenwasserstoffe
Automatic obturator for a vessel for separating light liquids such as hydrocarbons

(30) Priorité: 24.07.2003 FR 0309258
(43) Date de publication de la demande: 26.01.2005
(73) Titulaire: Prefaest S.A., 21270 Maxilly-sur-Saône (FR)
(72) Inventeur: Muller-Wille, Per Cabinet Ballot, 25000 Besancon (FR); Bediola, Manuel Cabinet Ballot, 25000 Besancon (FR)
(74) Mandataire: Bentz, Jean-Paul

(56) Documents cités:
- EP-A- 0 276 861
- EP-A- 0 887 095
- DE-A- 4 312 007
- US-A- 4 132 238
- US-A- 4 405 458

## Description

La présente invention concerne un dispositif de sécurité destiné aux cuves de récupération d'effluents et à la séparation des liquides légers tels qu'hydrocarbures, par rapport à un liquide lourd tel que l'eau, afin de les recycler ensuite séparément.

La séparation des liquides légers par rapport aux liquides lourds contenus dans les effluents est obtenu de manière gravitaire par flottation s'effectuant naturellement entre les liquides légers surnageant au-dessus des liquides lourds.

En fait, dans ce type de cuve, les effluents de récupération constitués par un mélange d'eau, de fioul, d'essence, etc... sont récupérés par un conduit d'entrée et un conduit de sortie permet, après séparation des hydrocarbures, de l'eau, d'évacuer cette dernière en vue de son recyclage. Les hydrocarbures ou tous liquides légers se trouvant à la surface de l'eau sont quant à eux extraits de la cuve par tout moyen, tel que pompage par exemple.

En fait, cette extraction des liquides légers s'effectue selon une périodicité prédéterminée ou par l'intermédiaire d'une alarme électronique de déclenchement en fonction de la masse de liquides légers accumulés à la surface de l'eau.

Afin de prévenir toute défaillance de ce type de système d'alarme, il est nécessaire d'obturer le conduit de sortie d'eau lorsque la masse de liquides légers est trop importante ou que pour différentes raisons l'extraction n'a pas été effectuée, car dans ce cas, il y aurait un danger de pollution de l'eau en sortie de cuve, ne répondant plus aux normes de qualité existant sur la qualité de l'eau rejetée, en fonction des effluents reçus dans la cuve.

Pour remédier à cet inconvénient, il est connu un dispositif de sécurité du type constitué par un obturateur automatique formé d'un flotteur taré pour flotter par rapport à l'interfaces eau/liquides légers et comportant à sa partie supérieure des ouvertures situées à une distance de l'interfaces sensiblement égale à l'épaisseur de liquides légers maximum admise à la surface de la cuve, épaisseur au-delà de laquelle les liquides légers pénètrent dans le flotteur pour l'alourdir et l'entraîner vers l'entrée d'un circuit d'évacuation de l'eau situé à proximité du fond de la cuve sur laquelle il agit en fermeture, par l'intermédiaire de moyens d'obturation, afin de retenir l'eau.

Dans ce type d'obturateurs automatiques connus, les moyens d'obturation sont constitués par une tige s'étendant à partir de la partie inférieure du flotteur et à l'extrémité de laquelle est rapportée une soupape susceptible d'agir en fermeture sur l'entrée du circuit d'évacuation de l'eau.

De tels moyens présentent l'inconvénient de nécessiter l'assemblage de plusieurs pièces entraînant un surcoût du système d'obturation.

Un autre inconvénient réside dans l'encombrement de l'ensemble flotteur-moyens d'obturation.

Sont également connus par les brevets américains N° 4 405 458 et 4 132 238 des dispositifs dans lesquels sont mis en oeuvre des flotteurs sensibles à la densité du liquide environnant, mais ne l'incorporant pas directement, pour en être lesté et entrainer ledit flotteur vers un circuit d'évacuation à obturer.

Il en résulte que ces dispositifs ne sont pas adaptés pour réagir en fonction d'une épaisseur de liquides légers maximum admise et flottant à la surface de l'eau.

La présente invention a pour but de remédier à ces inconvénients et concerne à cet effet un dispositif de sécurité pour une cuve destinée à la récupération d'effluents et à la séparation gravitaire par flottation de liquides légers tels qu'hydrocarbures, par rapport à un liquide lourd tel que l'eau qu'ils contiennent, afin de les recycler ensuite séparément, lequel dispositif est du type constitué par un obturateur automatique formé d'un flotteur taré pour flotter par rapport à l'interface eau/liquides légers et comportant à sa partie supérieure des ouvertures situées par rapport à l'interface en fonction de l'épaisseur des liquides légers maximum admise à la surface de l'eau, épaisseur au-delà de laquelle les liquides légers pénètrent dans le flotteur pour l'alourdir et l'entraîner vers l'entrée d'un circuit d'évacuation de l'eau, située à proximité du fond de la cuve, sur laquelle il agit en fermeture par l'intermédiaire de moyens d'obturation afin de retenir l'eau, caractérisé en ce que ces moyens sont intégrés au flotteur et constitués par sa propre partie inférieure externe, dont la section correspond sensiblement à celle de l'entrée du circuit d'évacuation de l'eau, susceptible d'être fermée par action directe du flotteur, formant ainsi un ensemble d'obturation automatique compact.

Selon le but recherché un tel obturateur automatique présente l'avantage d'avoir un encombrement réduit à celui du flotteur proprement dit et d'un coût de réalisation minimum, car ne faisant intervenir aucune pièce intermédiaire.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 représente schématiquement en coupe un séparateur d'hydrocarbures équipé du dispositif de sécurité constitué par un obturateur automatique selon l'invention.
La figure 2 représente l'obturateur automatique selon une position initiale, c'est à dire dans une eau dépourvue d'hydrocarbure.
La figure 3 représente un obturateur automatique dans une eau à la surface de laquelle s'est accumulée une épaisseur h1 d'hydrocarbures.
La figure 4 représente un obturateur automatique dans une eau à la surface de laquelle s'est accumulée une épaisseur h2 d'hydrocarbures, supérieure à l'épaisseur h1 et constituant l'épaisseur admise à partir de laquelle l'équilibre du flotteur s'annule.
La figure 5 représente un obturateur automatique dans une eau à la surface de laquelle s'est accumulée l'épaisseur h2 d'hydrocarbures, celui-ci s'étant introduit dans le flotteur pour le faire plonger vers l'entrée du circuit d'évacuation de l'eau.
La figure 6 représente un obturateur automatique dans une position de fermeture de l'entrée d'un circuit d'évacuation de l'eau à la surface de laquelle s'accumule une épaisseur h3 d'hydrocarbures supérieure à l'épaisseur h2 et h1.

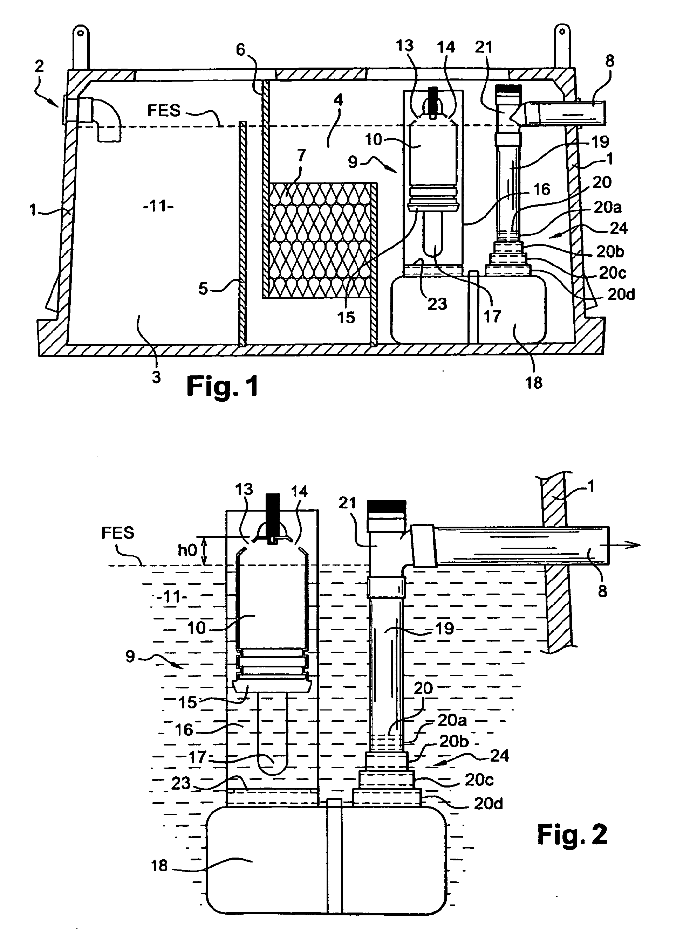

Le séparateur d'hydrocarbures représenté à la figure 1 est constitué par une cuve 1 destinée à la récupération d'effluents et à la séparation gravitaire par flottation d'hydrocarbures, par rapport à l'eau contenue dans les effluents, afin de les recycler par la suite.

Les effluents arrivent par un conduit d'entrée 2 dans un premier compartiment 3 de la cuve où ils subissent une première séparation gravitaire par flottation avant d'être recueillis dans un deuxième compartiment 4 de ladite cuve 1 lorsque le niveau du compartiment 3 est supérieur à la hauteur d'un séparateur 5 interposé entre les deux compartiments 3 et 4.

Les effluents pénètrent dans le compartiment 4 par la partie inférieure d'un deuxième cloisonnement 6 libérant le fond du compartiment 4.

La pénétration des effluents dans le compartiment 4 s'effectue par l'intermédiaire d'un filtre 7 situé à proximité du fond du compartiment 4.

Une telle cuve à double compartiments est citée à titre d'exemple, sachant qu'il pourrait également s'agir d'une cuve avec un compartiment unique.

L'eau issue de la séparation gravitaire par flottation des effluents par rapport aux hydrocarbures, selon le principe des vases communicants, est récupérée par un tube d'évacuation 8 situé dans le plan FES (Fil Eau Sortie).

De manière à obtenir un équilibre entre le débit d'entrée par le tube 2 dans la cuve 1 et le débit de sortie par le tube d'évacuation 8, les diamètres de ces deux tubes seront préférentiellement identiques. On favorise ainsi également le principe des vases communicants.

Comme on le voit bien sur la figure 1, un obturateur automatique 9 désigné globalement est interposé entre le tube 2 et le tuyau d'évacuation 8.

De manière connue, l'obturateur automatique 9 est formé d'un flotteur 10 taré pour flotter par rapport à l'interfaces constituée par le plan du fil d'eau de sortie (FES), marquant la séparation entre l'eau 11 et les hydrocarbures 12.

Le flotteur 10 comporte à sa partie supérieure des ouvertures 13 et 14.

Ces ouvertures 13, 14 sont situées par rapport à l'interface (FES) en fonction de l'épaisseur h2 d'hydrocarbures 12 maximum admise à la surface de l'eau 11, épaisseur h2 au-delà de laquelle les hydrocarbures 12 pénètrent dans le flotteur 10 pour l'alourdir et l'entraîner vers l'entrée 23 d'un circuit d'évacuation 24 de l'eau 11, située à proximité du fond de la cuve 1 sur laquelle il agit en fermeture. Ceci est obtenu par l'intermédiaire de moyens d'obturation 15, afin de retenir l'eau 11 dans la cuve 1, plus précisément dans le compartiment 4 de cette cuve, afin d'éviter que ne se produise une surépaisseur d'hydrocarbures 12, non admise à la surface de l'eau 11.

Selon l'invention, les moyens d'obturation 15 sont intégrés au flotteur 12 et constitués par sa propre partie inférieure externe 15, dont la section correspond sensiblement à celle de l'entrée 23 du circuit d'évacuation 24 de l'eau 11 susceptible d'être fermée par action directe du flotteur 10, formant un ensemble d'obturation automatique compact.

Préférentiellement, le flotteur 10 est de forme globalement cylindrique, sa partie inférieure 15 constituant les moyens d'obturation étant de forme tronconique afin de faciliter le centrage du flotteur 10 au cours de l'obturation de l'entrée 23 du circuit d'évacuation 24 de l'eau 11 d'une part et de s'affranchir des tolérances de dimensionnement des zones de contact d'autre part.

Selon un perfectionnement de la caractéristique précédente, la partie inférieure tronconique 15 du flotteur 10 constituant les moyens d'obturation comporte une gorge périphérique destinée à l'insertion partielle d'un joint torique (non représenté) apte à coopérer de manière étanche avec l'entrée 23 du circuit d'évacuation 24 de l'eau 11.

A l'inverse, une variante pourrait consister à placer un joint sur ladite entrée 23, pour assurer de la même manière l'étanchéité, lors de la fermeture.

Selon une autre caractéristique de l'invention, des moyens de guidage 16 du flotteur 10 sont interposés entre l'entrée 23 du circuit d'évacuation 24 de l'eau 11 et le niveau supérieur de la cuve 11, au moins dans la zone d'interfaces FES eau 11 / liquides légers 12.

Ces moyens de guidage 16 du flotteur 10 sont constitués par un tube de section cylindrique supérieure à celle dudit flotteur 10, de manière à permettre son coulissement, lors de sa descente vers l'entrée 23 du circuit d'évacuation 24 de l'eau 11.

Par ailleurs, le tube de guidage 16 du flotteur 10 comporte au moins une lumière oblongue 17, ménagée sur l'une de ses génératrices s'étendant d'une zone inférieure du tube 16 située à proximité de l'entrée 23 du circuit d'évacuation 24 de l'eau 11, jusqu'à une zone supérieure dudit tube 16 située au-dessus de l'interface FES eau 11 / liquides légers 12 et de l'épaisseur h2 des liquides légers 12 maximum souhaitée. De cette manière on met en communication la cuve 1 et le tube 16 et la hauteur d'eau 11 dans la cuve 1 et l'épaisseur de liquides légers 12 se formant à sa surface sont identiques, tant dans la cuve 1 que dans le tube 16, afin d'agir en conséquence sur le flotteur 10 qui s'y trouve.

C'est ainsi que ces lumières pourront, comme représentées sur les figures, être disposées en vis à vis sur des génératrices diamètralement opposées, mais elles pourraient également être décalées l'une par rapport à l'autre.

Le tube de guidage 16 s'étend sur une hauteur supérieure à la hauteur maximum des effluents se trouvant dans la cuve 1, assurant de cette manière un meilleur guidage du flotteur 10 même lorsqu'il se trouve en position haute.

Selon une autre caractéristique de l'invention, le tube de guidage 16 du flotteur 10 est relié à un circuit d'évacuation 24 de l'eau 11, qui comprend un boîtier de liaison 18 indépendant, disposé au fond de la cuve 1 et associant d'une part ledit tube de guidage 16 du flotteur 10 avec une ses ouvertures d'entrée adaptée 23 et d'autre part un tube d'évacuation 19 de l'eau vers une partie supérieure extérieure 8 de la cuve 1, avec une autre ouverture de sortie adaptée 20 dudit boîtier 18.

Selon un perfectionnement de la caractéristique précédente, l'ouverture de sortie 20 du boîtier de liaison 18 est de dimensions modulables en fonction de celles du tube d'évacuation 19 de l'eau 11 vers l'extérieur et de celles d'un tube d'entrée 2 dans la cuve 1, afin d'adapter les sections de passages desdits tubes 19, 2 qui doivent être sensiblement identiques, afin d'obtenir un équilibre entre le débit d'entrée dans la cuve 1 et le débit de sortie.

Cette modularité est obtenue par sectionnement d'une ou plusieurs parties cylindriques étagées concentriques 20a, 20b, 20c, 20d de diamètres dégressifs, allant d'un diamètre maximum correspondant à celui de l'ouverture de base du boîtier 18, à un diamètre minimum correspondant au sommet de l'étagement.

Avantageusement, le boîtier de liaison 18 ainsi que le tube de guidage 16 et le tube d'évacuation 19 sont réalisés par moulage d'une matière plastique.

Comme on le voit bien sur les figures, le tube d'évacuation 19 est relié à un tube de sortie 8 par l'intermédiaire d'un élément en « T » 21.

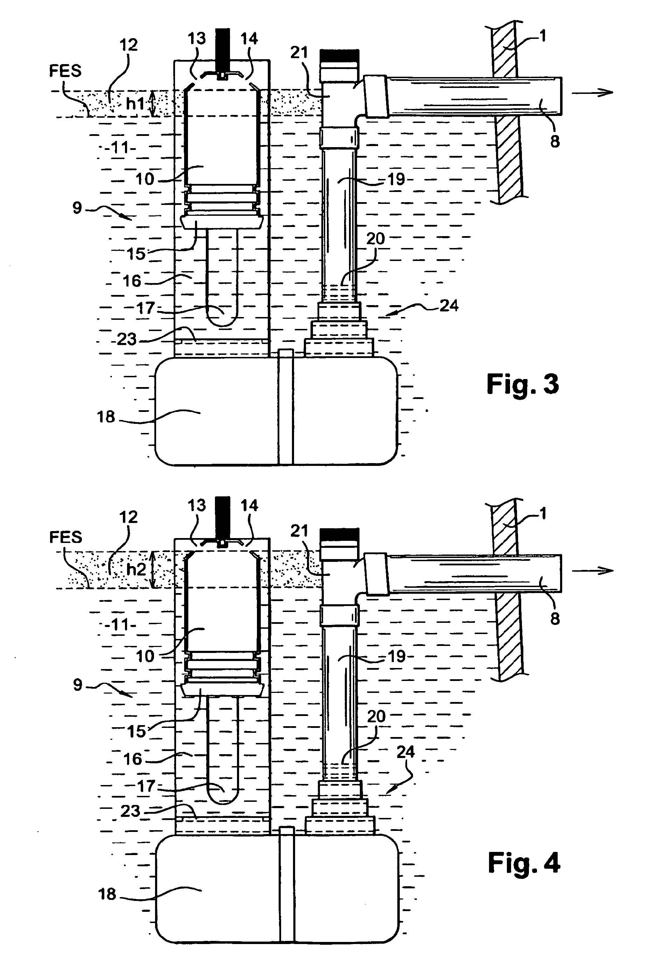

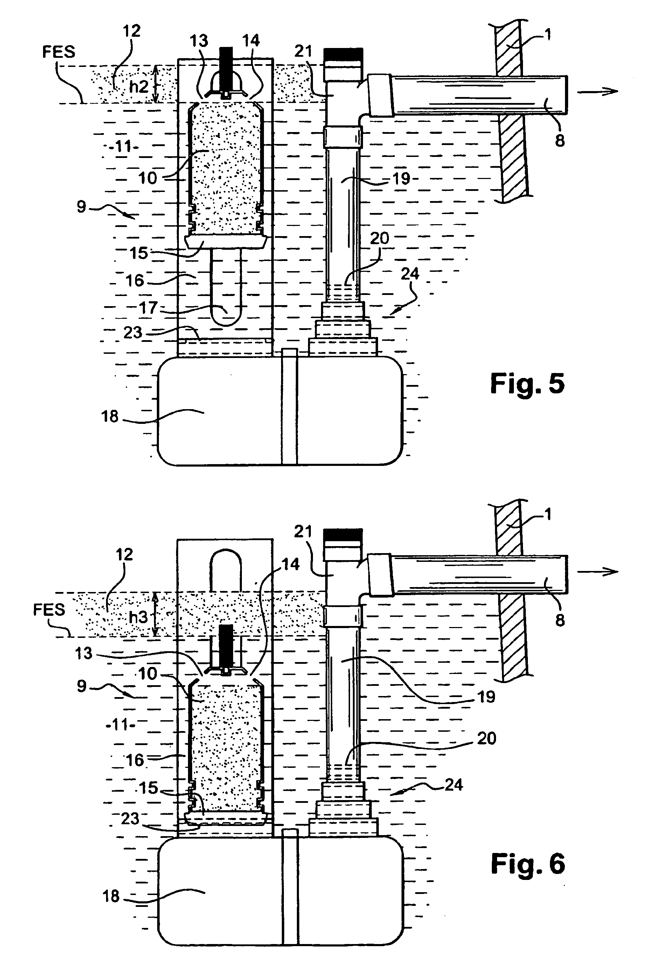

Le fonctionnement de l'obturateur automatique 9 représenté sur les figures est le suivant :
- selon la figure 2, la cuve 1, plus précisément son compartiment 4, se remplit d'eau 11 dépourvue de liquides légers 12. Le flotteur 10 émerge du fil d'eau sortie FES d'une hauteur hO. Comme on le voit également sur cette figure, les ouvertures 13 et 14 se situent au-dessus du plan FES et par conséquent, le flotteur 10 n'exerce aucune action en fermeture sur le circuit d'évacuation 24 de l'eau 11 qui s'en échappe naturellement, selon le principe des vases communicants.
- selon la figure 3, des liquides légers 12 ont été séparés de l'eau 11 et surnagent à la surface de celle-ci selon une épaisseur h1. Comme on le voit sur cette même figure, le flotteur 10 suit le niveau de liquides légers 12 mais en s'enfonçant très légèrement car la hauteur d'eau 11 dans laquelle il flotte a diminué pour être remplacée par l'épaisseur h1 de liquides légers. Les ouvertures 13, 14 sont toujours dégagées.
- selon la figure 4 l'épaisseur h2 de liquides légers 12 s'est épaissie et pour les même raisons qu'évoquées ci-dessus, le flotteur 10 s'enfonce un peu plus dans la masse liquide constituée d'eau 11 et de liquides légers 12.
- les ouvertures 13 et 14 se trouvent au ras du fil de liquides légers 12.
- selon la figure 5, les liquides légers 12 ont pénétrés dans les ouvertures 13 et 14 du flotteur 10 pour remplir celui-ci.
- selon la figure 6, le flotteur 10 rempli de liquides légers 12 s'est alourdi de manière telle à l'entraîner vers le fond et obturer l'entrée 23 du circuit d'évacuation 24 de l'eau 11.

A partir de ce stade, le fonctionnement du séparateur de liquides légers tel qu'hydrocarbures est stoppé, pouvant éventuellement déclencher une alarme qui se sera pas décrite ici.

La réactivation du séparateur d'hydrocarbures pourra s'effectuer qu'après avoir vidé et nettoyé le flotteur et avoir pompé la couche de liquides légers 12 accumulée à la surface de l'eau 11.

Selon un autre avantage de l'invention, procuré par la modularité de l'ouverture de sortie 20 du boîtier de liaison 18, il est ainsi possible de standardiser l'ensemble flotteur 10-obturateur 15, quel que soit le diamètre du tube de sortie 8, devant être au moins égal à celui d'entrée 2.

L'entrée du boîtier 23 à l'entrée du boîtier 18 étant standard et adapté au diamètre du tube d'entrée 2 et un flotteur 10 correspondant alors que sa sortie 20 est modulable comme décrit précédemment.

## Revendications

1. Dispositif de sécurité pour une cuve (1) destinée à la récupération d'effluents et à la séparation gravitaire par flottation de liquides légers tels qu'hydrocarbures, par rapport à un liquide lourd tel que l'eau qu'ils contiennent, afin de les recycler ensuite séparément, lequel dispositif est du type constitué par un obturateur automatique (9) formé d'un flotteur (10) taré pour flotter par rapport à l'interface (FES) eau (11)/liquides légers (12) **caractérisé en ce que** le flotteur comporte à sa partie supérieure des ouvertures (13, 14) situées par rapport à l'interface (FES) en fonction de l'épaisseur (h2) de liquides légers (12) maximum admise à la surface de l'eau (11), épaisseur (h2) au-delà de laquelle les liquides légers (12) pénètrent dans le flotteur (10) pour l'alourdir et l'entraîner vers l'entrée (23) d'un circuit d'évacuation (24) de l'eau (11), située à proximité du fond de la cuve (1), sur laquelle il agit en fermeture par l'intermédiaire de moyens d'obturation (15) afin de retenir l'eau (11), ledit flotteur (10) étant de forme globalement cylindrique, sa partie inférieure (15) constituant les moyens d'obturation étant de forme tronconique afin de faciliter le centrage du flotteur (10) au cours de l'obturation de l'entrée (23) du circuit d'évacuation (24) de l'eau (11) d'une part et de s'affranchir des tolérances de dimensionnement des zones de contact d'autre part.

2. Dispositif selon la revendication 1, **caractérisé en ce que** la partie inférieure tronconique (15) du flotteur (10) constituant les moyens d'obturation comporte une gorge périphérique destinée à l'insertion partielle d'un joint torique apte à coopérer de manière étanche avec l'entrée (23) du circuit d'évacuation (24) de l'eau (11).

3. Dispositif selon l'une des revendications 1 à 2, **caractérisé en ce que** des moyens de guidage (16) du flotteur (10) sont interposés entre l'entrée (23) du circuit d'évacuation (24) de l'eau (11) et le niveau supérieur de la cuve (11), au moins dans la zone d'interfaces (FES) eau (11) / liquides légers (12).

4. Dispositif selon la revendication 3, **caractérisé en ce que** les moyens de guidage (16) du flotteur (10) sont constitués par un tube de section cylindrique supérieure à celle dudit flotteur (10), de manière à permettre son coulissement, lors de sa descente vers l'entrée (23) du circuit d'évacuation (24) de l'eau (11).

5. Dispositif selon la revendication 4, **caractérisé en ce que** le tube de guidage (16) du flotteur (10) comporte au moins une lumière oblongue (17), ménagée sur l'une de ses génératrices s'étendant d'une zone inférieure du tube (16) située à proximité de l'entrée (23) du circuit d'évacuation (24) de l'eau (11), jusqu'à une zone supérieure dudit tube (16) située au-dessus de l'interface (FES) eau (11) / liquides légers (12) et de l'épaisseur (h2) de liquides légers (12) maximum souhaitée, de manière à mettre en communication la cuve (1) et le tube (16), la hauteur d'eau (11) dans la cuve (1) et l'épaisseur de liquides légers (12) se formant à sa surface étant identiques tant dans la cuve (1) que dans le tube (16), afin d'agir en conséquence sur le flotteur (10) qui s'y trouve.

6. Dispositif selon l'une des revendications 4 ou 5, **caractérisé en ce que** le tube de guidage (16) du flotteur (10) est relié à un circuit d'évacuation (24) de l'eau (11), qui comprend un boîtier de liaison (18) indépendant, disposé au fond de la cuve (1) et associant d'une part ledit tube de guidage (16) du flotteur (10) avec une ses ouvertures d'entrée adaptée (13) et d'autre part un tube d'évacuation (19) de l'eau vers une partie supérieure extérieure (8) de la cuve (1), avec une autre ouverture de sortie adaptée (20) dudit boîtier (18).

7. Dispositif selon la revendication 6, **caractérisé en ce que** l'ouverture de sortie (20) du boîtier de liaison (18) est de dimensions modulables en fonction de celles du tube d'évacuation (19) de l'eau (11) vers l'extérieur et de celles d'un tube d'entrée (2) dans la cuve (1), afin d'adapter les sections de passages desdits tubes (19, 2) qui doivent être sensiblement identiques, afin d'obtenir un équilibre entre le débit d'entrée dans la cuve (1) et le débit de sortie.

8. Dispositif selon la revendication 7, **caractérisé en ce que** la modularité des dimensions de l'ouverture de sortie (20) du boîtier de liaison (18) est obtenu par sectionnement d'une ou plusieurs parties cylindriques étagées concentriques (20a, 20b, 20c, 20d) de diamètres dégressifs allant d'un diamètre maximum correspondant à celui de l'ouverture de base du boîtier (18) à un diamètre minimum correspondant au sommet de l'étagement.

9. Dispositif selon l'une des revendications 6 à 8, **caractérisé en ce que** le boîtier de liaison (18) ainsi que le tube de guidage (16) et le tube d'évacuation (19) sont réalisés par moulage d'une matière plastique.

## Claims

1. Safety device for a vessel (1) designed for the recovery of effluents and for the gravity separation by floatation of light liquids, such as hydrocarbons, from a heavy liquid such as the water that they contain, in order to subsequently recycle them separately, which device is of the type consisting of an automatic obturator (9) formed of a float (10) preloaded to float relative to the water (11)/light liquids (12) interface (FES), **characterized in that** the float comprises, on its top portion, apertures (13, 14) situated relative to the interface (FES) as a function of the maximum thickness (h2) of light liquids (12) allowed on the surface of the water (11), the thickness (h2) beyond which the light liquids (12) enter the float (10) in order to make it heavier and draw it towards the entrance (23) of a discharge circuit (24) for discharging the water (11), situated close to the bottom of the vessel (1), which entrance it causes to close via stopping means (15) in order to retain the water (11), the said float (10) being of generally cylindrical shape, its bottom portion (15) forming the stopping means being of frustoconical shape in order to make it easier to centre the float (10) during the stopping of the entrance (23) of the discharge circuit (24) for discharging the water (11) on the one hand and in order to dispense with the tolerances of dimensioning of the contact zones, on the other hand.

2. Device according to Claim 1, **characterized in that** the frustoconical bottom portion (15) of the float (10) forming the stopping means comprises a peripheral groove designed for the partial insertion of an 0-ring suitable for interacting in a sealed manner with the entrance (23) of the discharge circuit (24) for discharging the water (11).

3. Device according to one of Claims 1 to 2, **characterized in that** guidance means (16) for guiding the float (10) are interposed between the entrance (23) of the discharge circuit (24) for discharging the water (11) and the top level of the vessel (11), at least in the water (11)/light liquids (12) interface zone (FES).

4. Device according to Claim 3, **characterized in that** the guidance means (16) for guiding the float (10) consist of a tube with a cylindrical section greater than that of the said float (10), so as to allow it to slide, when it descends towards the entrance (23) of the discharge circuit (24) for discharging the water (11).

5. Device according to Claim 4, **characterized in that** the guidance tube (16) for guiding the float (10) comprises at least one oblong opening (17) made on one of its generatrices extending from a bottom zone of the tube (16) situated close to the entrance (23) of the discharge circuit (24) for discharging the water (11) up to a top zone of the said tube (16) situated above the water (11)/light liquids (12) interface (FES) and the desired maximum thickness (h2) of light liquids (12) so as to place the vessel (1) and the tube (16) in communication, the height of water (11) in the vessel (1) and the thickness of light liquids (12) forming on its surface being identical both in the vessel (1) and in the tube (16) in order to act in consequence on the float (10) that is therein.

6. Device according to one of Claims 4 or 5, **characterized in that** the guidance tube (16) for guiding the float (10) is connected to a discharge circuit (24) for discharging the water (11), which comprises an independent connecting casing (18) placed at the bottom of the vessel (1) and connecting, on the one hand, the said guidance tube (16) for guiding the float (10) with one of its adapted inlet apertures (13) and, on the other hand, a discharge tube (19) for discharging the water to an outside top portion (8) of the vessel (1), with another adapted outlet aperture (20) of the said casing (18).

7. Device according to Claim 6, **characterized in that** the outlet aperture (20) of the connecting casing (18) has dimensions that can be modulated as a function of those of the discharge tube (19) for discharging the water (11) to the outside and of those of an inlet tube (2) into the vessel (1), in order to adapt the passageway sections of the said tubes (19, 2) which must be substantially identical, in order to obtain a balance between the inlet flow rate into the vessel (1) and the outlet flow rate.

8. Device according to Claim 7, **characterized in that** the modularity of the dimensions of the outlet aperture (20) of the connecting casing (18) is obtained by cutting one or more concentric stepped cylindrical portions (20a, 20b, 20c, 20d) with decreasing diameters from a maximum diameter corresponding to that of the base aperture of the casing (18) to a minimum diameter corresponding to the top of the stepped element.

9. Device according to one of Claims 6 to 8, **characterized in that** the connecting casing (18) and the guidance tube (16) and the discharge tube (19) are made by moulding a plastic material.

## Patentansprüche

1. Sicherheitsvorrichtung für einen Tank (1) zur Rückgewinnung von Abwasser und zur gravitativen Trennung mittels Flotation von leichten Flüssigkeiten, wie Kohlenwasserstoffen, von einer schweren Flüssigkeit, wie Wasser, das diese enthält, um diese nach der Trennung zurückzugewinnen, wobei diese Vorrichtung von der Bauart ist, die gebildet wird durch eine automatische Verschlusseinrichtung (9), die aus einem Schwimmer (10) gebildet wird, der zum Schwimmen in Bezug zu einer Grenzfläche (FES) Wasser (11)/schwere Flüssigkeiten (12) austariert ist, **dadurch gekennzeichnet, dass** der Schwimmer an seinem oberen Bereich Öffnungen (13, 14) aufweist, die gegenüber der Grenzfläche (FES) liegen, in Abhängigkeit von der maximalen Mächtigkeit (h2) der leichten Flüssigkeiten (12), die sich an der Oberfläche des Wassers (11) ansammelt, der Mächtigkeit (h2), oberhalb welcher die leichten Flüssigkeiten (12) in den Schwimmer (10) eintreten, um diesen zu beschweren und in Richtung des Eingangs (23) eines Abführungskreislaufs (24) des Wassers (11) mitzunehmen, der in der Nähe des Bodens des Tanks (1) liegt, auf welchem ein Verschluss mittels der Verschlusseinrichtung (15) wirkt, um das Wasser (11) zurückzuhalten, wobei der Schwimmer (10) im Wesentlichen zylinderförmig ist, wobei sein Unterbereich (15) die Verschlusseinrichtung mit kegelstumpfartiger Form bildet, um so einerseits die Zentrierung des Schwimmers (10) im Verlauf des Verschließens des Eingangs (23) des Abführkreislaufs (24) des Wassers (11) zu erleichtern und andererseits sich von Abmessungstoleranzen der Kontaktzonen freizumachen.

2. Vorrichtung nach Anspruch 1, **dadurch gekennzeichnet, dass** der untere kegelstumpfartige Bereich (15) des Schwimmers (10), welcher die Verschlusseinrichtung bildet, eine umfängliche Auskehlung umfasst, die zum teilweisen Einsatz einer wulstförmigen Dichtung bestimmt ist, die so ausgebildet ist, dass diese in dichtender Weise mit dem Eingang (23) des Abführkreislaufs (24) des Wassers (11) zusammenwirkt.

3. Vorrichtung nach einem der Ansprüche 1 bis 2, **dadurch gekennzeichnet, dass** eine Führungseinrichtung (16) des Schwimmers (10) zwischen dem Eingang (23) des Abführkreislaufs (24) des Wassers (11) und dem oberen Niveau des Tanks (11), wenigstens in der Grenzflächenzone (FES) Wasser (11)/leichte Flüssigkeiten (12) angeordnet ist.

4. Vorrichtung nach Anspruch 3, **dadurch gekennzeichnet, dass** die Führungseinrichtung (16) des Schwimmers (10) durch ein Rohr mit größerem zylindrischem Querschnitt als der Schwimmer (10) gebildet ist, derart, dass seine Verschiebung bei seinem Absinken in Richtung des Eingangs (23) des Abführkreislaufs (24) von Wasser (11) möglich ist.

5. Vorrichtung nach Anspruch 4, **dadurch gekennzeichnet, dass** das Führungsrohr (16) des Schwimmers (10) wenigstens ein Langloch (17) aufweist, das auf einer seiner Mantellinien ausgebildet ist, die sich von einer unteren Zone des Rohrs (16), die in der Nähe des Eingangs (23) des Abführkreislaufs (24) von Wasser (11) liegt, bis zu einer oberen Zone des Rohrs (16) erstreckt, die oberhalb der Grenzfläche (FES) Wasser (11)/leichte Flüssigkeiten (12) und der gewünschten maximalen Höhe (h2) der leichten Flüssigkeiten (12) liegt, derart, dass bei einer Kommunikation zwischen dem Tank (1) und dem Rohr (16) die Höhe des Wassers (11) in dem Tank (1) und die Höhe der leichten Flüssigkeiten (12), die sich an seiner Oberfläche bildet, sowohl in dem Tank (1) als auch in dem Rohr (16) identisch ist, um infolgedessen auf den Schwimmer (10) einzuwirken, der sich dort befindet.

6. Vorrichtung nach einem der Ansprüche 4 oder 5, **dadurch gekennzeichnet, dass** das Führungsrohr (16) des Schwimmers (10) mit einem Abführkreislauf (24) von Wasser (11) verbunden ist, der ein unabhängiges Verbindungsgehäuse (18) aufweist, das am Boden des Tanks (1) angeordnet ist und einerseits das Führungsrohr (16) des Schwimmers (10) mit einem seiner angepassten Eingangsöffnungen (13) und andererseits ein Abführrohr (19) für Wasser in Richtung eines äußeren oberen Bereichs (8) des Tanks (1) mit einer weiteren angepassten Ausgangsöffnung (20) des Gehäuses (18) verbindet.

7. Vorrichtung nach Anspruch 4, **dadurch gekennzeichnet, dass** die Ausgangsöffnung (20) des Verbindungsgehäuses (18) Abmessungen hat, die in Abhängigkeit von denjenigen des Abführrohrs (19) von Wasser (11) in Richtung Außenseite und derjenigen eines Eingangsrohrs (2) in den Tank (1) modulierbar ist, um so die Durchgangsquerschnitte der Rohre (19, 2) anzupassen, die im Wesentlichen identisch sein müssen, um ein Gleichgewicht zwischen dem Eingangsdurchsatz in den Tank (1) und dem Ausgangsdurchsatz zu erhalten.

8. Vorrichtung nach Anspruch 7, **dadurch gekennzeichnet, dass** die Modulierbarkeit der Abmessungen der Ausgangsöffnung (20) des Verbindungsgehäuses (18) durch eine Sektionierung eines oder mehrerer konzentrisch abgesetzter zylindrischer Bereiche (20a, 20b, 20c, 20d) durch degressive Durchmesser erhalten wird, ausgehend von einem maximalen Durchmesser, der demjenigen der Basisöffnung des Gehäuses (18) entspricht, zu einem minimalen Durchmesser, der der Spitze der Abstufung entspricht.

9. Vorrichtung nach einem der Ansprüche 6 bis 8, **dadurch gekennzeichnet, dass** das Verbindungsgehäuse (18) sowie das Führungsrohr (16) und das Abführrohr (19) durch Formung eines Kunststoffmaterials hergestellt sind.
